# EUROPEAN PATENT SPECIFICATION

(11) **EP 2 931 031 B1**
(45) Date of publication and mention of the grant of the patent: **14.12.2016**
(21) Application number: 13786169.6
(22) Date of filing: 31.10.2013
(51) Int. Cl.: A01M 13/00, A01M 17/00, A01G 25/06, A01N 59/24, A01M 1/24

(54) **METHOD FOR TREATING AGRICULTURAL LAND WITH GAS**
VERFAHREN ZUR BEHANDLUNG VON LANDBÖDEN MIT GAS
PROCÉDÉ PERMETTANT DE TRAITER UNE TERRE AGRICOLE AU GAZ

(30) Priority: 11.12.2012 DE 102012024180
(43) Date of publication of application: 21.10.2015
(73) Proprietor: Lucební Závody Draslovka A.S. Kolín, 280 99 Kolín IV (CZ)
(72) Inventor: WEIS, Volker, 85276 Pfaffenhofen a.d.Ilm (DE)
(74) Representative: Kratochvil, Vaclav
(86) International application number: PCT/EP2013/003288
(87) International publication number: WO 2014/090357

(56) References cited:
- EP-A1- 2 184 261
- WO-A1-00/05945
- WO-A1-2005/037332
- GB-A- 178 409
- GB-A- 258 324
- US-A1- 2009 087 467
- US-A1- 2011 239 918
- US-B1- 6 698 367

## Description

The invention relates to a method and device for fumigating agricultural land or other land areas.

Such a method for treating farmland or agricultural areas comprises the release of cyanogen into the soil, wherein the cyanogen is released into the ground at a depth of 10 cm to 50 cm, that is to say the cyanogen is released into the ground through one or more apertures in one or more lines, wherein such one or more apertures is/are located at said depth in the ground. The nearest background art for this invention is contained in documents WO2005037332 A1, GB258324 A and US6698367 B1.

The term "release condition" is understood to refer particularly to a pressure of 1 bar of the prevailing atmospheric or ambient pressure, and the respective ambient temperature.

The treatment of agricultural land with gas (fumigation) comprising biocidal substances such as cyanogen, phosphine, methyl bromide or carbonyl sulphide is generally known, and is used particularly for disinfecting and combating soil-borne pests such as nematodes, harmful fungi, bacteria or undesirable plant seeds. Currently during ground fumigation, cyanogen is introduced into the ground to a depth of 20 to 30 cm via a modified plough, wherein the gas is introduced directly into the furrow and the furrow is covered with soil immediately afterwards. This method is also called "shank injection". The ground is sealed off with a film as soon as the cyanogen has been applied.

This release of gaseous cyanogen into the soil may not be satisfactory in warmer climates, one of the main reasons being that cyanogen does not remain in the ground long enough. This leads to more cyanogen being needed to control the pests of concern. If pure cyanogen is injected into the ground as a liquid gas, the low boiling point of the liquid (-21.5°C) means that some of it evaporates as soon as it leaves the dispensing unit; because under typical release conditions, cyanogen is in the gaseous phase. Accordingly, cyanogen that has been released into the ground evaporates spontaneously and rises toward the surface. This spontaneous evaporation shortens the residence time of the cyanogen in the ground to be sterilized by fumigation, and therewith also the effectiveness of the fumigation. Moreover, a fraction of the cyanogen used escapes into the atmosphere as a result of this evaporation. Even warmer soil temperatures can affect fumigation negatively, because higher temperatures not only hasten the evaporation of the cyanogen, they also reduce the active fumigation time.

In view of the above, the object underlying the present invention is therefore to provide a method of the kind described in the introduction with improved performance with regard to the problem complex set forth above.

This problem is solved with a method having the features of claim 1.

Accordingly, it is provided that the cyanogen is dissolved in water before its release, and is introduced into the ground (into a furrow created by a plough, for example) as an aqueous cyanogen solution.

The cyanogen may be dissolved in water either in the gas-phase or as a liquefied gas. In particular, cyanogen may be dissolved in water particularly advantageously under pressure, particularly under a pressure of 2 bar to 30 bar. If the cyanogen is dissolved in water under elevated pressure, more strongly concentrated solutions of cyanogen can be prepared, particularly oversaturated cyanogen solutions.

The use of cyanogen in an aqueous solution instead of in the gas phase for fumigating areas of agricultural land offers a number of advantages. Firstly, the combustibility of the cyanogen during ground fumigation is reduced and the spontaneous evaporation thereof is suppressed. Secondly, the effectiveness of the cyanogen used for ground fumigation is increased, because the dissolved cyanogen is able to spread over a larger volume and has a longer residence time, thereby prolonging the fumigation period. Consequently, the quantity of cyanogen that has to be used for sterilisation can be reduced. This also has a worker exposure advantage with less cyanogen released into the air meaning it is a safer fumigation process for users.

In addition, use of a cyanogen solution reduces not only possible cyanogen emissions (release into the atmosphere) during ground fumigation but also the effect of the ground temperature on the fumigation.

After the cyanogen solution is released, a three-phase system is produced at the release site (in the ground):
- a gas phase, which is formed from the cyanogen evaporating from the liquid, wherein the resulting cyanogen can be used to combat pests,
- a liquid, oversaturated phase, from which cyanogen escapes and can spread widely in the ground, and can also be used to combat pests, and
- a liquid, saturated phase which is formed after outgassing of a part of the cyanogen and has a concentration corresponding to the solubility equilibrium of cyanogen.

According to one embodiment of the invention, an aqueous, oversaturated cyanogen solution is introduced into the ground. Such an oversaturated solution is particularly characterised by a cyanogen concentration that is greater than the cyanogen concentration given by the Henry's law constant. In particular, such an oversaturated solution has a concentration of more than 450 ml gas-phase cyanogen per 100 ml water, particularly at 20 °C and 1 bar.

According to a further embodiment, the oversaturated cyanogen solution has a concentration of more than 8 g/l, more than 9 g/l, more than 10 g/l, more than 11 g/l, more than 12 g/l, more than 13 g/l, more than 14 g/l, more than 15 g/l or more than 20 g/l. The greater the oversaturation concentration of cyanogen in the solution, the stronger the gas phase formed therefrom will be, as described above, and accordingly the more effectively the ground fumigation will be performed.

According to a further embodiment of the invention, the cyanogen is dissolved in water under a pressure from 1 bar to 30 bar.

According to a further embodiment of the invention, the cyanogen is dissolved in water by adding cyanogen to a defined flow of water. The advantage of this embodiment is that the cyanogen and the water are thoroughly mixed very quickly. A further advantage is that it offers the capability of providing or producing cyanogen solution continuously, at the release site for example.

According to a further embodiment, the cyanogen is introduced into the ground using a plough. One advantage of this embodiment is that the desired release depth can be reached with the plough that is used. A further advantage is that the soil to be fumigated is loosened by the plough, and this loosening results in improved propagation of the cyanogen solution and that of the cyanogen that escapes from the solution.

Such a plough is preferably equipped with gas or liquid delivery system, wherein some or all of the ploughshares on the plough may comprise one or more lines, and wherein the lines are designed to deliver gases or liquids to the tip of the ploughshare, for example. The lines are furnished with apertures through which the aqueous cyanogen solution is or can be released into the soil, and such apertures are located at the intended depth in the soil when the agent is released.

According to an embodiment of the invention, the ground is covered with a barrier film after the cyanogen solution has been released into the ground.

The method according to the invention is particularly suitable for use in fumigating geographically challenging farmland, that is to say areas with steep slopes, hills or depressions. Since the cyanogen solution is introduced into the ground and not deposited on the surface, as in other methods, the cyanogen solution remains in place at the release site and is not displaced from its intended release site by the force of gravity.

According to another aspect of the invention, a device for fumigating areas of agricultural land is provided that has a mixer designed to mix cyanogen and water in a pressure range from 1 bar to 30 bar to form an aqueous cyanogen solution, a first tank that is designed to store and supply cyanogen particularly in a pressure range from 1 bar to 200 bar, the first tank being connected to the mixer so that cyanogen can be delivered to the mixer from the first tank, and a water supply connected with the mixer, which is designed to store and / or supply said water to said mixer, and a delivery means connected with the mixer, which is designed to release the aqueous cyanogen solution that is produced in the mixer into the ground, preferably at a depth from 10 cm to 50 cm below the surface.

In this context, a connection between two components (for example the tanks, the mixer or the delivery means) denotes a connection in which a flow medium is transported, via which said cyanogen, water or the solution produced therefrom is transportable.

The term "water supply" shall cover any kind of provision of water, for example by public utilities, a pipe system, a tank, a vessel or any other source.

According to an embodiment of the invention, the water supply comprises a second tank. Preferably, the second tank is connected to a third tank, the third tank being designed to store and supply a gas or gas mixture, particularly nitrogen (under a pressure from 2 bar to 200 bar for example). In this case, the pressurized gas or gas mixture in the third tank may be used to force or propel the water out of the second tank and into the mixer.

According to a further embodiment of the invention, the delivery means is in the form of a plough that comprises one or more lines that are fed from the mixer, and each of which has at least one aperture for discharging the cyanogen solution. Lines of such kind with apertures may be provided on ploughshares of the plough, for example.

One advantage of the device according to the invention is that it offers the capability of continuously producing fresh cyanogen solution with the device, and of introducing it into the ground immediately after it has been prepared. This enables a more effective concentration of cyanogen, because cyanogen in water decomposes over time, initially forming oxamide and subsequently ammonia and carbon dioxide. A more effective cyanogen concentration not only enables more efficient fumigation, but it also means that the quantity of cyanogens required for fumigation can be reduced.

According to another embodiment of the invention cyanogen is dissolved in water and the resulting aqueous cyanogen solution is released into the ground via a drip tape. The term "drip tape" shall in particular mean tapes, tubes, hoses and dripperlines used in drip irrigation. The drip tape is provided with a large number of outlets, drippers or emitters. Water or any other fluid flows through the drip tape and exits the drip tape through the outlets / drippers.

The aqueous cyanogen solution is distributed to one or more drip tapes which are either placed onto the ground or, preferably, are placed sub-surface, for example at a depth from 10 cm to 30 cm below the ground surface. The drip tape is preferably located at or close to the final location of the plant roots with the soil fumigation completed pre-planting.

The water flow rate and the cyanogen volumes are determined by the area to be treated (treatment area), the soil type, the number of drip tapes, the length of the drip tapes and the drip rate, i.e. the volume of aqueous cyanogen solution per time and per length of drip tape. Furthermore, the application time (irrigation time) depends on the water flow rate and the treatment area.

The ground is covered with a barrier film while the aqueous solution is applied and breaks down in the soil (the soil fumigation process). The barrier film enhances both efficancy as well as worker and bystander safety.

Further details and advantages of the invention will be explained in the following descriptions of an embodiment thereof, with reference to the drawings.

In the drawing:
- Fig. 1: shows a device for carrying out the method according to the invention,
- Fig. 2: shows an alternative device according to the invention.

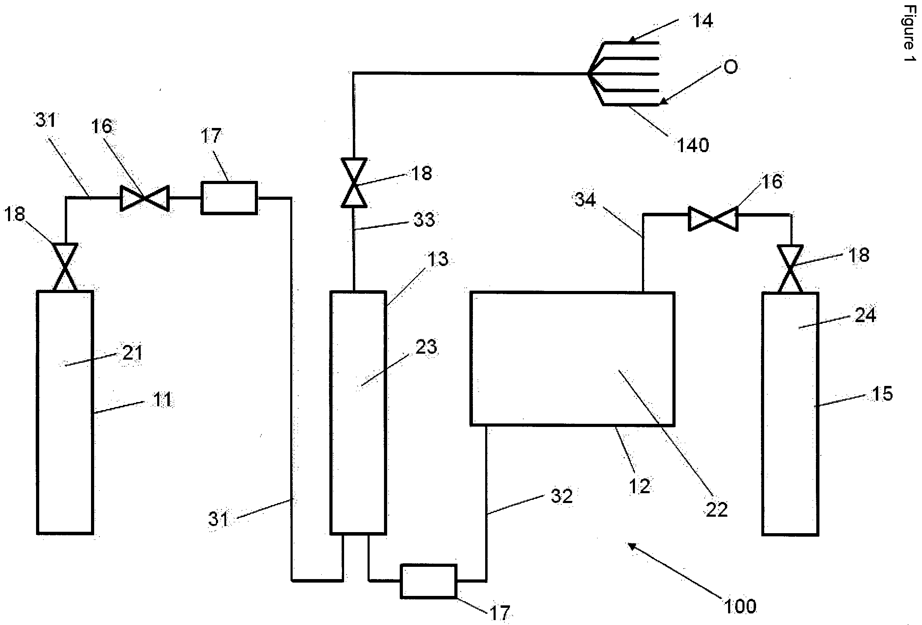

Unlike conventional methods, in the method according to the invention as shown in figure 1, before it is introduced into the ground the cyanogen 21 is dissolved in water 22, and this aqueous cyanogen solution 23 is then released into the ground, particularly at a depth from 10 cm to 50 cm below the surface. There, the cyanogen 21 is desorbed or is outgassed from solution 23 and rises slowly towards the surface, sterilizing the soil in the process. In order to produce aqueous cyanogen solution 23, cyanogen 21 and water 22 are mixed in a mixer 13, wherein the mixture 23 is created by adding gas-phase cyanogen 21 to a defined water flow 22. In mixer 13, the cyanogen 21 is preferably dissolved under elevated pressure, an increase in pressure resulting in a stronger concentration of cyanogen in solution 23. From mixer 13, the oversaturated cyanogen solution 23 obtained in this way is introduced into the ground via a plough 14, and the ground is covered with a barrier film.

The method according to the invention may be carried out for example using a device 100 as represented in figure 1. Such a device 100 comprises a first tank 11 (also referred to as the cyanogen tank), which is designed to store and supply cyanogen 21 under a pressure particularly from 1 bar to 50 bar. A mixer 13 or mixing chamber 13 is arranged downstream from cyanogen tank 11, wherein cyanogen tank 11 and mixer 13 are connected to one another via a cyanogen feed line 31. Cyanogen line 31 comprises a throttle 16 that is designed to relieve the pressurized cyanogen 21, a diaphragm 17 or mass-controlled regulator for measuring flowrate, and a valve 18.

Device 100 further comprises a second tank 12 (also referred to as the water tank), which is connected to mixer 13 via a water feed line 32, wherein water line 32 also comprises diaphragm 17 or other mass-controlled regulator for measuring flowrate. Water tank 12 is additionally connected to a third tank 15 (also referred to as the nitrogen tank) via a nitrogen feed line 34 wherein nitrogen tank 15 is designed to store and supply nitrogen 24 under a pressure particularly from 2 bar to 200 bar, and wherein nitrogen feed line comprises a throttle 16 and a valve 18. A plough 14 is also provided downstream from mixer 13, and is connected to mixer 13 via a cyanogen solution line 33, which is fitted with a valve 18 for metered dispensing of cyanogen solution 23. Plough 14 is equipped with one or more lines 140, each of which has an aperture O, through which the cyanogen solution 23 may be discharged into the ground at a predefined depth. Lines 140 may be provided on assigned ploughshares of plough 14, for example.

When the method according to the invention is carried out as represented in the embodiment of figure 1, pressurized cyanogen 21 is forwarded to cyanogens feed line . 31 through valve 18, depressurized to a definable pressure via throttle 16, and passed to mixer 13. There, the cyanogen 21 is preferably added to a defined water flow 22. For this purpose, water 22 is displaced out of water tank 12 and into mixer 13 with the aid of the compressed nitrogen 24 exiting nitrogen tank 15, wherein the compressed nitrogen 24 forces the water 22 out of water tank 12 and into mixer 13. The cyanogen solution 23 that is created in mixer 13 is then transported to plough 14 via cyanogen solution line 33 and released into the ground through apertures O in the lines 140.

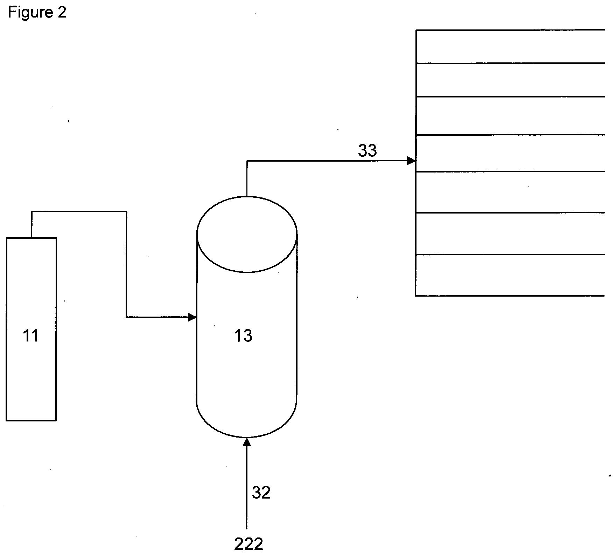

Figure 2 shows an alternative embodiment of the invention. Cyanogen is stored in a cyanogen tank 11 under a pressure particularly from 1 bar to 50 bar. A static mixer 13 is arranged downstream from cyanogen tank 11, wherein cyanogen tank 11 and static mixer 13 are connected to one another via a cyanogen feed line 31.

Static mixer 13 is further connected to a water supply 222 via a water feed line 32. One or more drip tapes 214 are also provided downstream from static mixer 13, and are connected to mixer 13 via a cyanogen solution line 33. The drip tapes 214 are placed into the ground at a depth between 10 cm and 20 cm below the ground surface.

When the method according to the invention is carried out as represented in the embodiment of figure 2, pressurized cyanogen 21 is forwarded to cyanogen feed line 31 and passed to static mixer 13. There, the cyanogen 21 is added to and thoroughly mixed with a defined water flow 222. The cyanogen solution that is created in the static mixer 13 is then transported to a number of drip tapes 214 via cyanogen solution line 33 and released into the ground through apertures in the drip tapes 214.

**List of reference signs**

| | |
|---|---|
| 11 | Cyanogen tank |
| 12 | Water tank |
| 13 | Mixer |
| 14 | Plough with gas feed line |
| 15 | Nitrogen tank |
| 16 | Throttle |
| 17 | Diaphragm |
| 21 | Cyanogen |
| 22 | Water |
| 23 | Cyanogen solution |
| 24 | Nitrogen |
| 31 | Cyanogen feed line |
| 32 | Water feed line |
| 33 | Cyanogen solution line |
| 34 | Nitrogen line |
| 100 | Device |
| 140 | Lines |
| 214 | Drip tape |
| 222 | Water supply |
| O | Apertures |

## Claims

1. A method for fumigating agricultural land or other land areas, in which cyanogen (21) is released into the ground, wherein the cyanogen (21) is released into the ground below the ground surface, particularly at a depth from 10 cm to 50 cm, **characterized in that** the cyanogen (21) is dissolved in water (22) before said release and is released into the ground in the form of an aqueous cyanogen solution (23).

2. The method according to claim 1, **characterized in that** an aqueous, oversaturated cyanogen solution (23) is released into the ground.

3. The method according to claim 1 or claim 2, **characterized in that** the cyanogen (21) is dissolved in water (22) under a pressure from 1 bar to 30 bar.

4. The method according to any of claims 1 to 3, **characterized in that** the aqueous cyanogen solution (23) is produced by adding the cyanogen (21) to a water flow (22).

5. The method according to any of claims 1 to 4, **characterized in that** the aqueous cyanogen solution (23) is released into the ground using a plough (14).

6. The method according to any of claims 1 to 4, **characterized in that** the aqueous cyanogen solution is released into the ground via a drip tape.

7. The method according to any of claims 1 to 5, **characterized in that** following said release of cyanogen solution (23) the ground is covered with a barrier film.

8. The method according to any of claims 1 to 4 and 6, **characterized in that** prior to said release of cyanogen solution (23) the ground is covered with a barrier film with drip tapes inserted to facilitate the fumigation.

9. A device for fumigating agricultural land or other land areas comprises a first tank (11) which is designed to store cyanogen, a water supply (32) and a delivery means (14) which is designed to release an aqueous cyanogen solution in the ground, below a surface of the ground, and particularly at a depth from 10 cm to 50 cm below the ground surface, **characterised in** having:
- a mixer (13) that is designed to mix cyanogen (21) and water (22) in a pressure range from 1 bar to 30 bar to form an aqueous cyanogen solution(23),
- wherein the first tank (11),
- the water supply (32) and
- the delivery means (14) are connected to the mixer (13).

10. The device according to claim 9, **characterized in that** said water supply comprises a second tank (12) which is designed to store water.

11. The device according to claim 10, **characterized in that** the second tank (12) is connected to a third tank (15), wherein the third tank (15) is designed to hold a gas (24) or gas mixtures (24) in order to force water that is stored in the second tank into the mixer (13).

12. The device according to any of claims 9 to 11, **characterized in that** the delivery means (14) is in the form of a plough (40) that particularly comprises at least one ploughshare, wherein the plough (40) comprises at least one line (140) with at least one aperture (O) for releasing the aqueous cyanogen solution (23).

13. The device according to any of claims 9 to 12, **characterized in that** said mixer (13) is a static mixer.

14. The device according to claim 9 or 13, **characterized in that** one or more drip tapes (214) are connected to said mixer (13).

## Patentansprüche

1. Verfahren der Begasung (Räucherung und Desinfektion durch Dämpfe) der landwirtschaftlichen oder anderen Grundstücke, bei dem Dicyan (21) in den Erdboden unter die Erdbodenoberfläche freigesetzt wird, insbesondere in der Tiefe von 10 cm bis 50 cm, **dadurch gekennzeichnet, dass** Dicyan (21) vor der Freisetzung in Wasser (22) gelöst wird und in den Erdboden in Form der wässrigen Dicyanlösung (23) freigesetzt wird.

2. Verfahren nach Anspruch 1, **dadurch gekennzeichnet, dass** die wässrige, übersättigte Dicyanlösung (23) in den Erdboden freigesetzt wird.

3. Verfahren nach Ansprüchen 1 oder 2, **dadurch gekennzeichnet, dass** das Dicyan (21) im Wasser (22) unter dem Druck von 1 bar bis 30 bar gelöst wird.

4. Verfahren nach einem der Ansprüche 1 bis 3, **dadurch gekennzeichnet, dass** die wässrige Dicyanlösung (23) durch Hinzufügen des Dicyans (21) in fließendes Wasser (22) erzeugt wird.

5. Verfahren nach einem der Ansprüche 1 bis 4, **dadurch gekennzeichnet, dass** die wässrige Dicyanlösung (23) in den Erdboden unter Verwendung eines Pfluges (14) freigesetzt wird.

6. Verfahren nach einem der Ansprüche 1 bis 4, **dadurch gekennzeichnet, dass** die wässrige Dicyanlösung in den Erdboden durch Tropfenband freigesetzt wird.

7. Verfahren nach einem der Ansprüche 1 bis 5, **dadurch gekennzeichnet, dass** nach der genannten Freisetzung der Dicyanlösung (23) der Erdboden mit einer Abdeckfolie abgedeckt wird.

8. Verfahren nach einem der Ansprüche 1 bis 4 und 6, **dadurch gekennzeichnet, dass** vor der genannten Freisetzung der Dicyanlösung (23) der Erdboden mit einer Abdeckfolie mit eingesteckten Tropfenbändern zur leichten Begasung abgedeckt wird.

9. Die Vorrichtung zur Begasung der landwirtschaftlichen oder anderen Grundstücke besteht aus dem ersten Behälter (11), der zur Aufbewahrung des Dicyans, zur Wasserzuleitung (32) und Zufuhr eines Anwendungsmittels (14) dient, das zur Freisetzung der Dicyanlösung in den Erdboden, unter die Erdbodenoberfläche, insbesondere in der Tiefe von 10 cm bis 50 cm unterhalb der Erdbodenoberfläche bestimmt wird, **dadurch gekennzeichnet, dass** diese Vorrichtung aufweist:
- Mischer (13), der zum Mischen von Dicyan (21) und Wasser (22) im Druckbereich von 1 bar bis 30 bar, zur Erzeugung der wässrigen Dicyanlösung (23) bestimmt wird,
- den ersten Behälter (11),
- Wasserzuleitung (32), Mischer-Anschluss (13), und
- Anwendungsmittel (14), am Mischer (13) angeschlossen.

10. Vorrichtung nach Anspruch 9, **dadurch gekennzeichnet, dass** die genannte Wasserzuleitung aus dem zweiten zur Wasserspeicherung bestimmten Behälter (12) besteht.

11. Vorrichtung nach Anspruch 10, **dadurch gekennzeichnet, dass** der zweite Behälter (12) am dritten Behälter (15) angeschlossen ist, der zur Lagerung von Gasen (24) oder Lagerung von Gasmischungen (24) bestimmt wird, deren Zweck ist, das im zweiten Behälter gespeicherte Wasser in den Mischer (13) hineinzudrücken.

12. Vorrichtung nach einem der Ansprüche 9 bis 11, **dadurch gekennzeichnet, dass** das Anwendungsmittel (14) die Form des Pfluges (40) hat, der insbesondere mindestens eine Pflugschar besitzt, wobei dieser Pflug (40) wenigstens mit einer Reihe (140) mit mindestens einer Öffnung (O) zur Freisetzung der wässrigen Dicyanlösung (23) gebildet wird.

13. Vorrichtung nach einem der Ansprüche 9 bis 12, **dadurch gekennzeichnet, dass** der genannte Mischer (13) statisch ist.

14. Vorrichtung nach Anspruch 9 oder 13, **dadurch gekennzeichnet, dass** am Mischer (13) ein Tropfenband oder mehrere Tropfenbänder (214) angeschlossen sind.

## Revendications

1. Méthode de fumigation des terres agricoles ou autres terrains, où le cyanogène (21) est libéré dans le sol sous la surface, notamment dans les profondeurs de 10 cm à 50 cm, **se caractérisant par le fait que** le cyanogène (21) est dilué dans l'eau (22) avant sa libération, et est libéré dans le sol sous forme de solution aqueuse de cyanogène (23).

2. Méthode selon la revendication 1, **se caractérisant par le fait que** la solution aqueuse de cyanogène saturée (23) est libérée dans le sol.

3. Méthode selon la revendication 1 ou 2, **se caractérisant par le fait que** le cyanogène (21) est dilué dans l'eau (22) sous la pression de 1 bar à 30 bar.

4. Méthode selon une des revendications 1 à 3, **se caractérisant par le fait que** la solution aqueuse de cyanogène (23) est fabriquée par l'ajout de cyanogène (21) dans l'eau courante (22).

5. Méthode selon une des revendications 1 à 4, **se caractérisant par le fait que** la solution aqueuse de cyanogène (23) est libérée dans le sol à l'aide d'une charrue (14).

6. Méthode selon une des revendications 1 à 4, **se caractérisant par le fait que** la solution aqueuse de cyanogène est libérée dans le sol à travers une bande d'égouttage.

7. Méthode selon une des revendications 1 à 5, **se caractérisant par le fait que** la solution aqueuse de cyanogène (23) étant libérée, la terre est recouverte d'une feuille de couverture.

8. Méthode selon une des revendications 1 à 4 et 6, **se caractérisant par le fait qu**'avant la libération de la solution aqueuse de cyanogène (23) étant libérée, la terre est recouverte d'une feuille de couverture avec les bandes d'égouttage engagées pour une fumigation plus facile.

9. Le dispositif de fumigation des terres agricoles ou autres terrains est composé de : premier réservoir (11) destiné au stockage de cyanogène, alimentation en eau (32), moyen d'application (14) destiné à la libération de la solution aqueuse de cyanogène dans le sol, sous la surface notamment dans les profondeurs de 10 cm à 50 cm, **se caractérisant par le fait que** ce dispositif comporte :
- mélangeur (13) destiné au mélange de cyanogène (21) et eau (22) dans l'intervalle des pressions de 1 bar à 30 bar pour la fabrication de la solution aqueuse de cyanogène (23),
- premier réservoir (11),
- alimentation en eau (32), raccordement au mélangeur (13), et
- appareil d'application (14) raccordé au mélangeur (13).

10. Dispositif selon la revendication 9, **se caractérisant par le fait que** l'alimentation en eau se compose d'un deuxième réservoir (12) destiné au stockage de l'eau.

11. Dispositif selon la revendication 10, **se caractérisant par le fait que** le deuxième réservoir (12) est raccordé à un troisième réservoir (15) destiné au stockage du gaz (24) ou des mélanges de gaz (24) destinés à enfoncer l'eau du deuxième réservoir dans le mélangeur (13).

12. Dispositif selon une des revendications 9 à 11, **se caractérisant par le fait que** l'appareil d'application (14) a la forme d'une charrue (40) qui comporte au moins un soc, cette charrue (40) étant constituée d'au moins une ligne (140) avec aýu moins une ouverture (O) pour la libération de la solution aqueuse de cyanogène (23).

13. Dispositif selon une des revendications 9 à 12, **se caractérisant par le fait que** ledit mélangeur (13) est statique.

14. Dispositif selon une des revendications 9 à 13, **se caractérisant par le fait qu**'une ou plusieurs bandes d'égouttage (214) sont raccordées audit mélangeur (13).
